# EUROPÄISCHE PATENTANMELDUNG

(11) **EP 1 857 332 A2**
(43) Veröffentlichungstag der Anmeldung: **21.11.2007**
(21) Anmeldenummer: 07108156.6
(22) Anmeldetag: 14.05.2007
(51) Int. Cl.: B60R 21/13

(54) **Überrollschutzsystem für Kraftfahrzeuge mit mindestens einem aktiv aufstellbaren Überrollkörper**

(30) Priorität: 18.05.2006 DE 102006023502
(71) Anmelder: Automotive Group ISE Innomotive Systems Europe GmbH, 51702 Bergneustadt (DE)
(72) Erfinder: Nowack, Reinhard, 57489 Drolshagen-Hützemert (DE); Röhner, Stephan, 44287 Dortmund (DE); Nagy, Géza, 2013 Pomaz (HU); Lang, Jozsef, 1131 Budapest (HU)
(74) Vertreter: Fuchs

(57) **Zusammenfassung**

Bei derartigen Überrollschutzsystemen ist der sensorgesteuert durch Auslösen einer Haltevorrichtung aktiv aufstellbare Überrollkörper typischerweise innerhalb des Fahrgastraumes angebracht. Es sind jedoch auch Fahrzeuge am Markt, bei dem der Überrollkörper (7) außerhalb des Fahrgastraumes im Heckbereich innerhalb der Karosserie (3) angeordnet ist, welche oberhalb des aufstellbaren Überrollkörpers (7) einen Ausschnitt (8) aufweist, der im Normalbetrieb durch eine Klappe (9) abgedeckt ist.

Diese Klappe kann jedoch insbesondere im Winterfahrbetrieb durch Eis bzw. Schnee relativ festsitzen.

Um ein sicheres und zeitnahes Aufstellen des Überrollkörpers zu gewährleisten, sieht die Erfindung vor, dass die Klappe (9) in Wirkverbindung mit einer Einrichtung zum sensorgesteuerten mechanischen Öffnen der Klappe (9) aus dem sie aufnehmenden Ausschnitt (8) steht, welche mit der Haltevorrichtung (7 a, 15 c) gekoppelt ist.

## Beschreibung

Die Erfindung bezieht sich auf ein Überrollschutzsystem für Kraftfahrzeuge mit mindestens einem sensorgesteuert durch Auslösen einer Haltevorrichtung aktiv aufstellbaren Überrollkörper, das außerhalb des Fahrgastraumes im Heckbereich innerhalb der Karosserie angeordnet ist, welche oberhalb des aufstellbaren Überrollkörpers einen Ausschnitt aufweist, der im Normalbetrieb durch eine Klappe abgedeckt ist.

Derartige Überrollschutzsysteme dienen zum Schutz der Insassen in Kraftfahrzeugen ohne schützendes Dach, typischerweise in Cabriolets oder Sportwagen, indem sie bei einem Überschlag einen Überlebensraum für die Insassen aufspannen.

Es ist dabei bekannt, einen die gesamte Fahrzeugbreite überspannenden, fest installierten Überrollbügel vorzusehen (EP 0 233 777) oder jedem Fahrzeugsitz einen höhenunveränderlich fest installierten Überrollbügel (DE 196 04 423) zuzuordnen. Neben diesen sogenannten starren Überrollbügeln sind auch weit verbreitet konstruktive Lösungen für sogenannte aktive Überrollbügelsysteme im Markt, bei denen der Überrollbügel im Normalzustand abgelegt ist, und im Gefahrenfall, also bei einem drohenden Überschlag, sensorgesteuert mittels eines Energiespeichers schnell in eine schützende verriegelte Position aufgestellt wird, um zu verhindern, dass die Fahrzeuginsassen durch das sich überschlagende Fahrzeug erdrückt werden.

Diese "aktiven" Überrollschutzsysteme weisen typischerweise für jeden Sitz einen in einem fahrzeugfesten Kassetten-Gehäuse mit seinen Bügelschenkeln meist linear geführten U-förmigen Überrollbügel auf, der im Normalzustand gegen die Vorspannkraft einer AntriebsDruckfeder durch eine Haltevorrichtung in einer unteren Ruhelage gehalten wird, und im Überschlagfall sensorgesteuert unter Lösen der Haltevorrichtung, durch die Federkraft in eine obere, stützende Stellung bringbar ist, wobei eine dann in Wirkeingriff tretende Verriegelungseinrichtung ein Eindrücken des Überrollbügels in die Kassette verhindert.
Eine derartige sitzbezogene Kassetten-Konstruktion eines Überrollbügetschutz-systems mit linear aufstellendem Überrollbügel und mit einer Sperrklinke in der Verriegelungseinrichtung zeigt beispielsweise die DE 100 40 642 C1.

Es sind jedoch auch Überrollschutzsysteme mit einem annähernd die gesamte Fahrzeugbreite überspannenden, aktiv aufstellbaren Überrollbügel bekannt. Dabei kann der Bügelkopf als durchgehende Bügelschale (DE 195 40 819 A1) oder als Querjoch gemäß der DE 197 12 955 A1 ausgebildet sein, oder kann im Bereich der Fahrzeugsitze bügelkopfartige Ausformungen in einem Querjoch aufweisen (DE 100 44 930 C1).

Die bekannten, vorbeschriebenen Überrollschutzsysteme sind typischerweise im Innern des Fahrgastraumes angebracht.

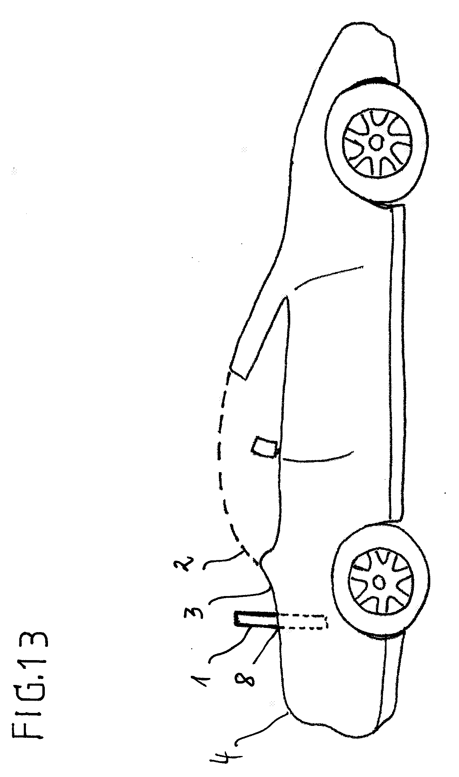

Es gibt jedoch auch Fahrzeuge, bei denen das Überrollschutzsystem außerhalb des Fahrgastraumes, d.h. im Außenbereich des Fahrzeuges, liegt. Ein typisches Beispiel ist der Sportwagen/das Cabriolet von Lamborghini.
Wie die Fig. 13 zeigt, ist bei diesen Fahrzeugen das Überrollschutzsystem 1, das nach Art einer "black box" schematisch angedeutet ist, direkt hinter der Heckscheibe 2 unter dem Karosserieteil 3 vor der Heckklappe 4 angebracht. Dabei ist der sensorgesteuert aufgestellte Zustand des Überrollkörpers des Überrollschutzsystems gezeigt.

Damit der Überrollkörper des Schutzsystems ausfahren kann, besitzt das Karosserieteil 3 einen entsprechenden Ausschnitt 8, der durch eine geeignete Abdeckung, z.B. einen Deckel bzw. Klappe abgedeckt, vorzugsweise verclipt, ist, und beim Ausfahren des Überrollkörpers aufgestoßen wird.
Durch die äußere Anbringung des Überrollschutzsystems mit der zugehörigen Abdeckung besteht jedoch die Gefahr, dass die Abdeckung, unter der sich der Überrollkörper verbirgt, im folgenden als Klappe bezeichnet, witterungsbedingt, insbesondere durch Schnee, Eis; Eisregen etc., nicht zeitnah oder überhaupt nicht vom Überrollbügel aufgestoßen wird.

Der Erfindung liegt die Aufgabe zugrunde, das eingangs bezeichnete Überrollschutzsystem so auszubilden, dass ein sicheres Aufstellen des Überrollkörpers auch bei relativ festsitzender Klappe gewährleistet ist.

Die Lösung dieser Aufgabe gelingt bei einem Überrollschutzsystem für Kraftfahrzeuge mit mindestens einem sensorgesteuert durch Auslösen einer Haltevorrichtung aktiv aufstellbaren Überrollkörper, das außerhalb des Fahrgastraumes im Heckbereich innerhalb der Karosserie angeordnet ist, welche oberhalb des aufstellbaren Überrollkörpers einen Ausschnitt aufweist, der im Normalbetrieb durch eine Klappe abgedeckt ist gemäß der Erfindung dadurch, dass die Klappe in Wirkverbindung mit einer Einrichtung zum sensorgesteuerten mechanischen Öffnen der Klappe aus dem sie aufnehmenden Ausschnitt steht, welche mit der Haltevorrichtung gekoppelt ist.

Die erfindungsgemäße Einrichtung gewährleistet, dass eine insbesondere durch Schnee bzw. Eis festsitzende Klappe geöffnet wird oder zumindest so gelockert ist, dass sie durch den ausfahrenden Überrollkörper ohne weiteres zeitnah aufstoßbar ist.

Ausführungsformen der Erfindung sind in Unteransprüchen gekennzeichnet und ergeben sich auch durch die nachfolgende Figurenbeschreibung.

Es zeigen dabei:
- Fig. 1: in einer isometrischen schematisierten Darstellung ein Überrollschutzsystem mit einem sensorgesteuert ausfahrbaren, in einem karosseriefesten Außenprofil gehalterten Innenprofil-Überrollkörper, das heckseitig außerhalb des Fahrgastraumes im Innern der Karosserie unterhalb eines Ausschnittes in der Karosserie, welche durch eine Klappe abgedeckt ist, zusammen mit der erfindungsgemäßen Einrichtung zum sensorgesteuerten mechanischen Öffnen der Klappe angeordnet ist,

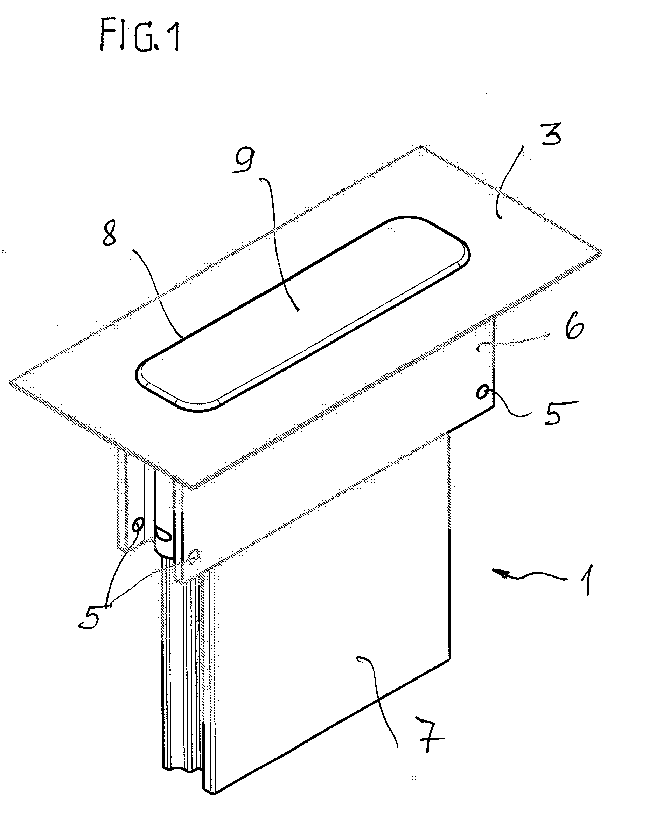

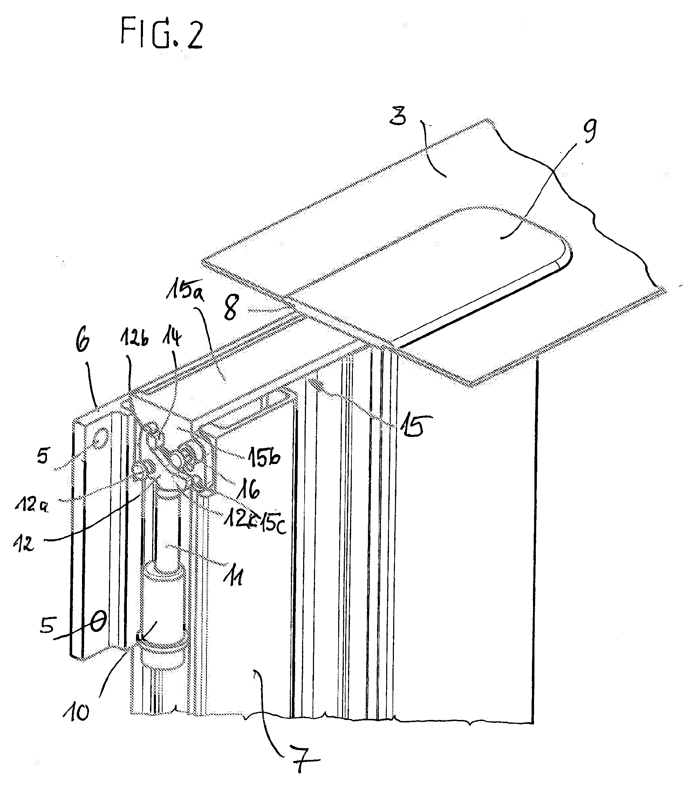

- Fig. 2: eine isometrische Darstellung entsprechend Fig. 1 mit zum Teil weggebrochenem Außenprofil und Heckteil mit Klappe, welche einen Blick auf eine erste Ausführungsform der erfindungsgemäßen Öffnungs-Einrichtung, bestehend aus einem schwenkbaren Klappenauswerfer und einer federvorgespannten Drehklinke zum Verriegeln des Klappenauswerfers und einem Koppelelement zum Lösen der Haltevorrichtung für das Überrollschutzsystem ermöglicht, wobei die Drehklinke durch eine pyrotechnische Aktuatoranordnung sensorgesteuert unter Entriegelung des Klappenauswerfes und Auslösen der Haltevorrichtung verschwenkbar ist,
- Fig. 3: einen Ausschnitt aus Fig. 2 in isometrischer Darstellung mit Blick auf die Innenseite des Klappenauswerfers,
- Fig. 4: eine Draufsicht-Darstellung auf den Ausschnitt nach Fig. 3, welcher insbesondere die innere Geometrie der Profilkörper erkennen lässt,
- Fig. 5: in vier Figurenteilen A - D mit längsschnittartigen Darstellungen der Öffnungs-Einrichtung nach den Figuren 2 - 4 in vier Betriebszuständen von der Ruhe-Grundstellung bis hin zur ausgeworfenen Klappe,
- Fig. 6: eine Variante der ersten Ausführungsform nach den Figuren 1 - 5, mit unterschiedlich gestalteter Drehklinke und Kopplung mit der Haltevorrichtung des Überrollkörpers in sieben Betriebszuständen gemäß den Figurenteilen A bis G, beginnend mit der Grundstellung im Normalbetrieb bis hin zum aufgestellten Zustand des Überrollkörpers,
- Fig. 7: in einer isometrischen Darstellung eine weitere Ausführungsform der Erfindung bei einem Überrollschutzsystem mit einem U-förmigen Überrollbügel, die keinen Klappenauswerfer, sondern eine scharnierartige Baueinheit zum Einfahren, d.h. Versenken der Klappe innerhalb der Karosserie aufweist,
- Fig. 8: einen Ausschnitt aus Fig. 7 unter näherer Darstellung der Einfahr-Baueinheit,
- Fig. 9: in zwei Figurenteilen A, B die Scharnierfunktion der Einfahr-Baueinheit,
- Fig. 10: in sechs Teilfiguren A bis F in längsschnittartigen Darstellungen die Ausführungsform nach Fig. 7 in unterschiedlichen Betriebszuständen vom Grundzustand bis hin zum aufgestellten Zustand des Überrollbügels unter besonderer Darstellung der Kopplung zwischen der Klappeneinfahr-Einheit und der Haltevorrichtung für den Überrollbügel,
- Fig. 11: in einer isometrischen Darstellung eine weitere Ausführungsform der Erfindung ähnlich derjenigen nach Fig. 1, bei der jedoch die Klappe am Klappenauswerfer befestigt ist und durch eine entsprechende Gestaltung der Drehklinke und durch Bolzen am Klappenauswerfer unterschiedliche Schwenkbereiche des Auswerfers mit unterschiedlichen Kräften vorgegeben sind,
- Fig. 12: in vier Figurenteilen A bis D mit längsschnittartigen Darstellungen unterschiedliche Betriebszustände der Ausführungsform nach Fig. 11 vom Grundzustand bis hin zum aufgestellten Zustand des Überrollkörpers, und
- Fig. 13: in einer schematischen Übersichtsdarstellung ein Kraftfahrzeug mit im Heckteil außerhalb des Fahrgastraumes eingebauten Überrollschutzsystem.

Die Zeichnungen zeigen, generell gesagt, ein sensorgesteuert aufstellbares Überrollschutzsystem, das außerhalb des Fahrgastraumes heckseitig unterhalb des sich an die Heckscheibe anschließenden Karosserieabschnittes eingebaut ist und durch eine aufgesetzte Klappe bündig mit dem Karosserieabschnitt abgedeckt ist.

Der Kerngedanke der Erfindung besteht nun darin, einen aktivierbaren Mechanismus, der im folgenden als Klappenauswerfer bezeichnet wird, in Wirkkontakt mit der Klappe vorzusehen, derart, dass durch Zünden eines pyrotechnischen Aktuators oder Aktivierens eines Auslösemagneten der Klappenauswerfer in der Weise betätigt wird, dass dieser die Klappe entfernt.
Die Haltevorrichtung für den Überrollbügel steht ebenfalls in Wirkverbindung mit dem Klappenauswerfer, der bei seiner Aktivierung auch die Haltevorrichtung löst, wodurch der ausfahrbare Teil des Überrollbügels in die aufgestellte Stützposition fahren kann.

Aufbauend auf diesen Kerngedanken sind mehrere Varianten möglich, wie:
● Die Klappe kann nach oben aufgestoßen werden oder auch nach innen eintauchen
● Der Klappenauswerfer kann an dem Überrollschutzsystem befestigt sein oder an der Fahrzeugkarosse
● Die Klappe kann ferner direkt am Klappenauswerfer befestigt sein

Diese Varianten werden im folgenden im Zusammenhang mit dem Kerngedanken beschrieben.

Die Fig. 1 zeigt in einer schematisierten isometrischen AusschnittDarstellung aus Fig. 13 symbolhaft den sich an die Heckscheibe anschließenden Karosserieabschnitt 3, unterhalb dem der Überrollkörper des Überrollschutzsystems 1 mit den zugehörigen üblichen Komponenten angebracht ist.
Im dargestellten Ausführungsbeispiel besitzt das Überrollschutzsystem ein über Befestigungslöcher 5 fahrzeugfest angebrachtes Außenprofil 6, von dem in Fig. 1 nur ein oberer Abschnitt gezeigt ist. In dem Außenprofil 6 ist ein Innenprofil 7 gleitend geführt aufgenommen, das als aufstellbarer Überrollkörper fungiert.
Derartige aus Profilen gebildete Überrollschutzsysteme sind bekannt. Sie werden beispielsweise in der DE 195 23 790 A1 und der DE 199 25 520 C1 beschrieben, so dass wegen weiterer Einzelheiten wie Haltevorrichtung, Antriebsmittel und Verriegelungseinrichtung, auf diese Schrift Bezug genommen wird.

In dem Karosserieabschnitt 3 ist ein Ausschnitt 8 vorgesehen, der einen Durchtritt des Innenprofils 7 beim Aufstellen ermöglicht. Im normalen Fahrbetrieb ist dieser Ausschnitt 8 mit einer Klappe 9 und einer umlaufenden Dichtung abgedeckt, die vorzugsweise entsprechend der Karosserie lackiert ist.

In der Fig. 1 sind die erwähnten Komponenten Klappenauswerfer und der sensorgesteuerte Aktuator nicht erkennbar.
Daher wurden in der Darstellung nach Fig. 2, die das System entsprechend Fig. 1 zeigt, Teile weggebrochen, so dass nunmehr vorgenannte Komponenten erkennbar sind, auch in Verbindung mit den auf Fig. 2 folgenden Figuren.

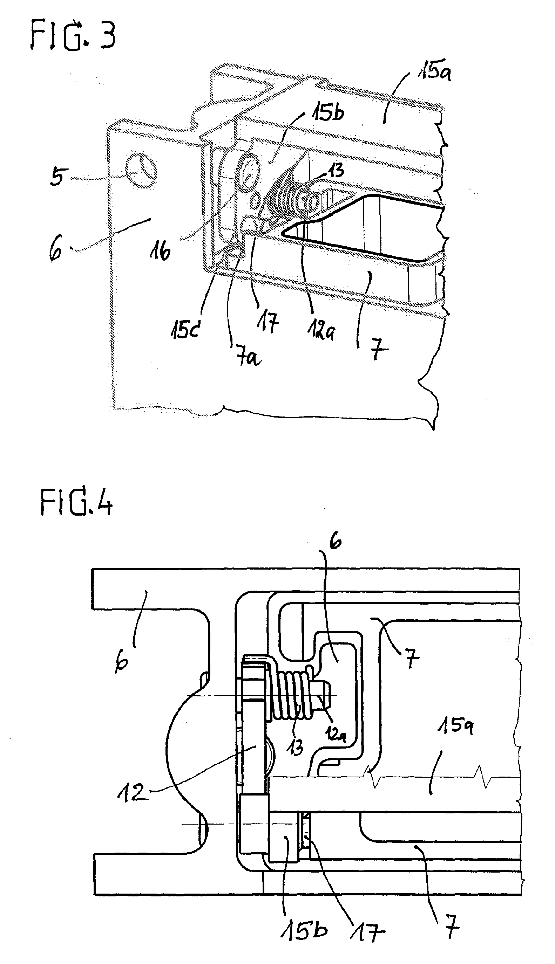

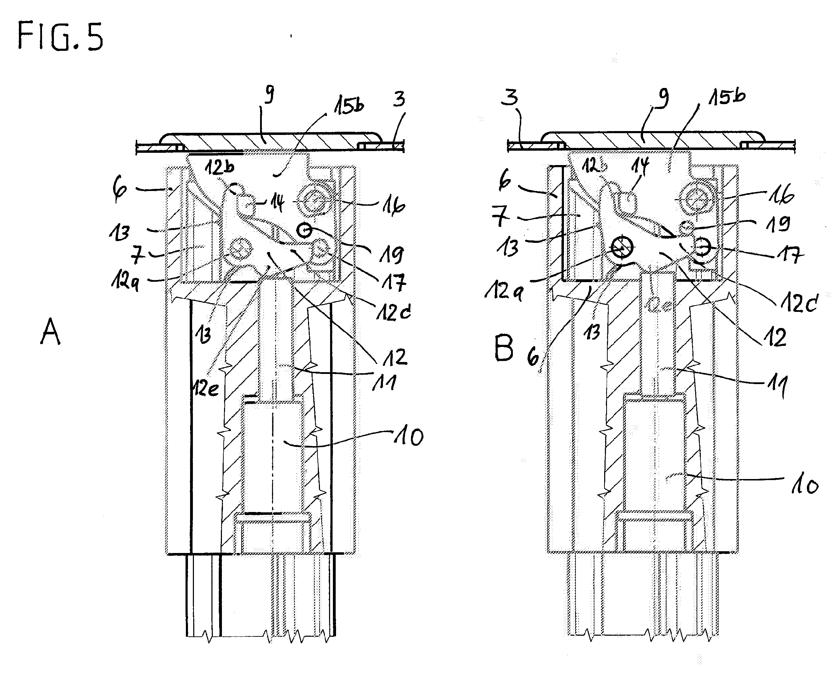

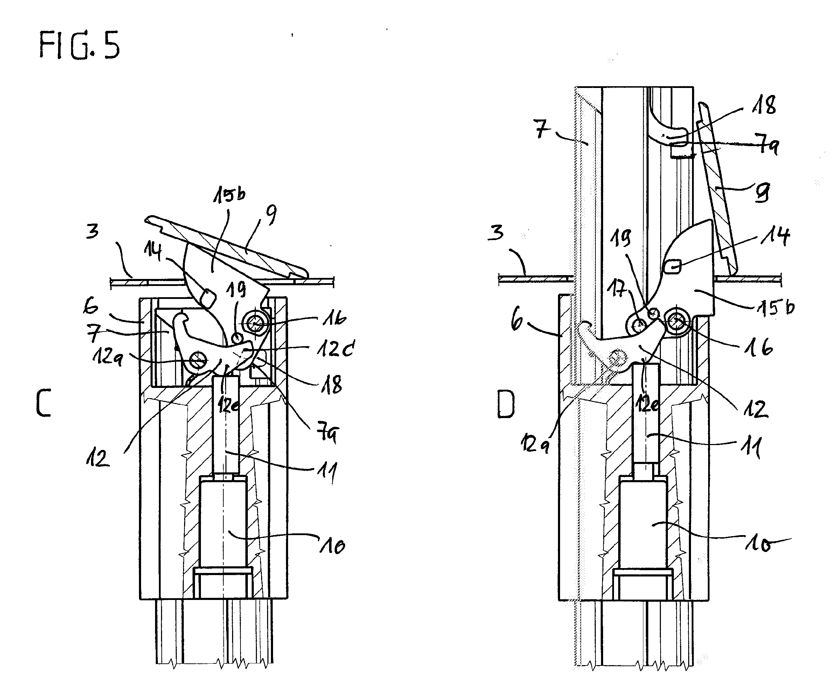

In einer äußeren Auskehlung am Außenprofil 6 ist ein pyrotechnischer Aktuator 10 mit einem Stößel 11 angebracht. Der Stößel 11 steht in Wirkverbindung mit einer Drehklinke 12, welche am Außenprofil um eine Achse 12 a drehbar angelenkt ist und durch eine Klinkenfeder 13, gebildet durch eine Schenkelfeder, im verriegelten Sinne vorgespannt ist (Fig. 3). Die Drehklinke 12 besitzt eine Halteklaue 12 b, die im Normalzustand im verklinkten Wirkeingriff mit einer Rastnase 14 am Auswerfer 15 für die Klappe 9 steht. Dieser Klappenauswerfer 15 besitzt ein entsprechend der Länge des Ausschnittes 8 langgestrecktes Oberteil 15 a zum direkten Auswerfen der Klappe 9 und an beiden Enden jeweils ein wangenartiges Seitenteil 15 b, das um die Achse 16 drehbar am Außenprofil 6 angelenkt ist. An dem dargestellten Seitenteil 15 b ist an seinem vorderen, unteren Ende eine abgerundete Nase 15 c angeformt, an der ein Haltebolzen 17 angebracht ist (Fig. 3), welcher in lösbarer Wirkverbindung mit einer Schulter 7 a am Innenprofil 7 steht (Fig. 5 C und D) und dabei die Haltevorrichtung bildet, welche das Innenprofil 7, also den Überrollkörper, im Normalzustand gegen die Vorspannkraft von nicht dargestellten Federn niederhält. Die Federn können Druckfedern zum Aufstellen des Überrollkörpers oder bei einem pyrotechnischen Antrieb Federn zum Fixieren des Überrollkörpers in der Ruhelage sein). Der Haltebolzen 17 gleitet dabei auf seinem Auslöseweg in einer Laufkulisse 18 des Innenprofils, wie insbesondere die Fig. 5 D zeigt.

Am Seitenteil 15 b ist, wie die Figurenteile A - D der Fig. 5 erkennen lassen, ein Schwenkbolzen 19 fest angebracht, der mit der Drehklinke 12 im Wirkkontakt steht. Dieser Schwenkbolzen 19 in Verbindung mit der Drehklinke 12 ist verantwortlich für die auswerfende Drehbewegung des Klappenauswerfers 15. Im Grundzustand hat die Betätigungsnase 12 c einen kleinen Abstand zum Schwenkbolzen (Fig. 5 A). Unmittelbar nach dem Auslösen des pyrotechnischen Aktuators 10 liegt der Stößel 11 an der Drehklinke 12 sowie diese am Schwenkbolzen 19 an und die Halteklaue 12 b steht unmittelbar vor der Freigabe der Rastnase 14 (Figurenteil 5 B). Die Stößelbewegung verschwenkt dann über die Nocke 12 e die Drehklinke 12, die ihrerseits über ihre Betätigungsnase 12 c und den Schwenkbolzen 19 den Klappenauswerfer 15 im Uhrzeigersinn gegen die Kraft der Klinkenfeder 13 verschwenkt. Der Figurenteil 5 C zeigt dabei den Zustand bei angehobener Klappe 9 und der Figurenteil 5 D die vollständig ausgeworfene Klappe 9. Unmittelbar nach der Position im Figurenteil
5 C gibt der Haltebolzen 17 die Schulter 7 a des Innenprofils 7 frei, d.h. die Haltevorrichtung ist dann ausgelöst, so dass das Innenprofil 7, der Überrollkörper, in die Stützstellung ausfahren kann (Figurenteil D).

Wie man anhand der Fig. 5 erkennen kann, liegen die Drehachse 16 des Klappenauswerfers 15 und die Achse des Haltebolzens 17 nicht auf einer gemeinsamen vertikalen Linie, sondern diese Achsen weisen einen seitlichen, d.h. horizontalen Versatz auf. Dadurch ergibt sich eine Übertotpunkt-Verriegelung, die zum einen als eine zusätzliche Verriegelung zur Klinkenverriegelung dient und zum anderen eine Vorspannung auf den Klappenauswerfer 15 ausübt, welche ein eventuell auftretendes Klappern verhindert.

In der Ausführungsform nach den Figuren 1 bis 5 ist die Klinkenfeder 13 als Schenkelfeder ausgeführt, wobei sich der eine Schenkel am Außenprofil abstützt (Fig. 5 B), und der andere Schenkel die Drehachse 12 a der Drehklinke 12 umgreift und an der Drehklinke ein Widerlager findet, wie insbesondere die Fig. 4 zeigt. Es versteht sich für den Fachmann, dass auch andere Feder-Typen für die Erzeugung der Vorspannung der Drehklinke zum Einsatz kommen können.

In dem beschriebenen Ausführungsbeispiel ist ein Stößel 11 zwischen dem auslösenden Stift des pyrotechnischen Aktuators 10 und der Betätigungsnase 12 c der Drehklinke 12 vorgesehen. Prinzipiell kann dieser zusätzliche Stößel entfallen, d.h. der Aktuator könnte sehr dicht unterhalb der Drehklinke 12 angeordnet werden, damit sein Auslösestift direkt mit der Betätigungsnase in Wirkeingriff kommt.

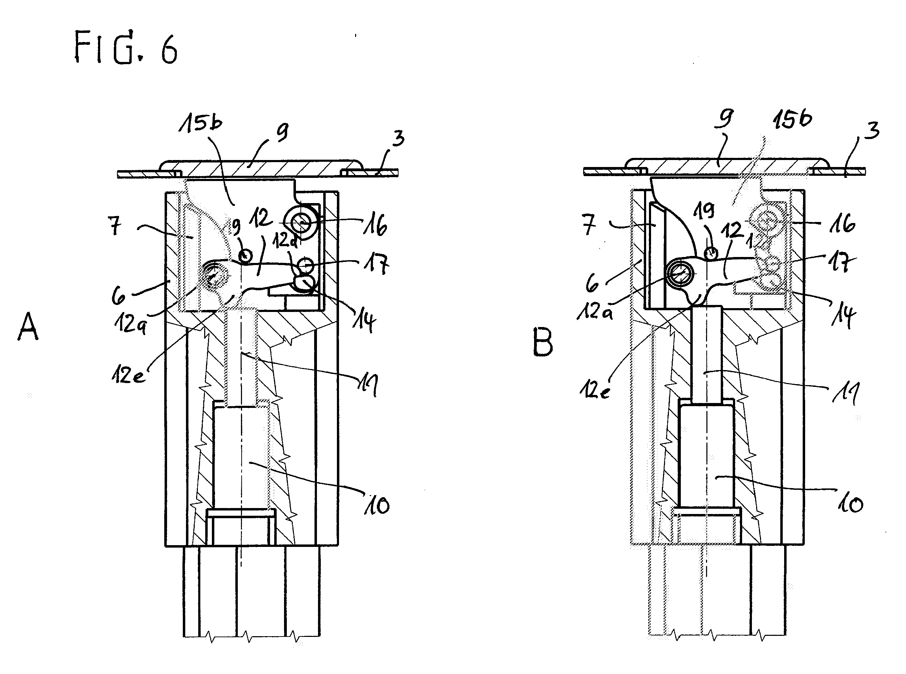

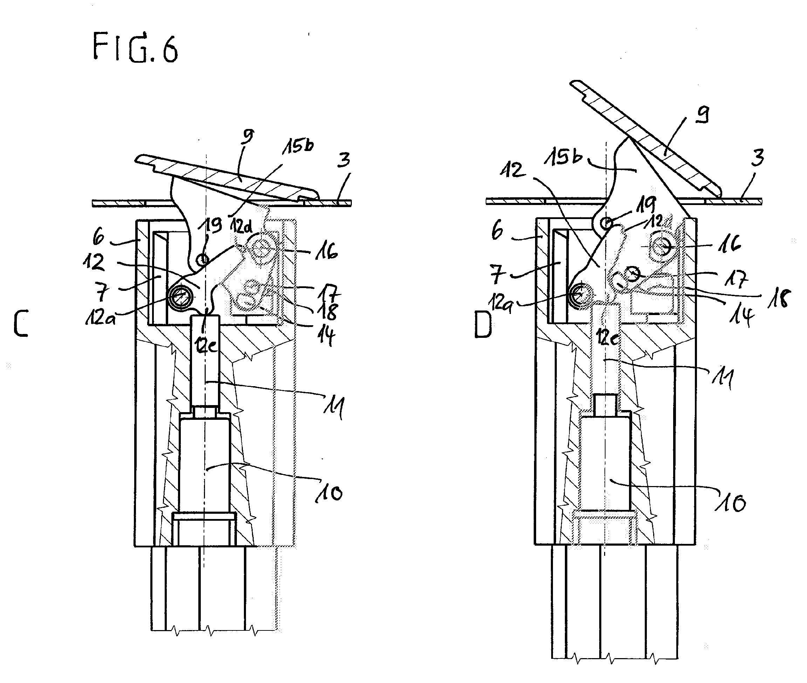

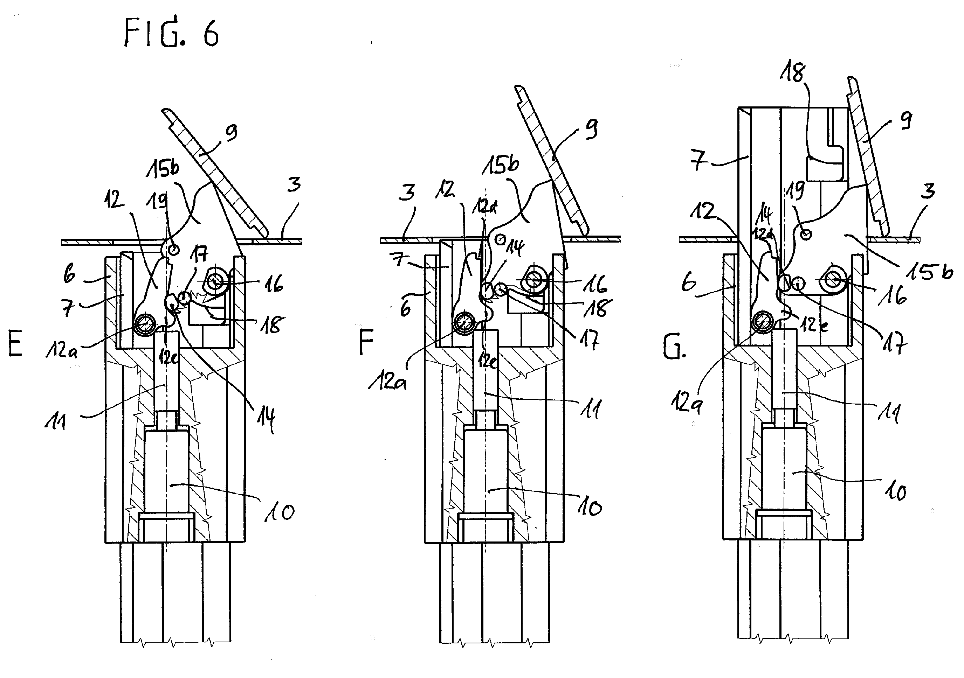

Die Fig. 6 zeigt eine alternative Ausführungsform zu der ersten, in den Figuren 1 bis 5 dargestellten Ausführungsform, und zwar in verschiedenen Betriebszuständen gemäß den Figurenteilen 6 A bis 6 G. Soweit diese zweite Ausführungsform Bauteile enthält, die mit denjenigen nach der ersten Ausführungsform übereinstimmen, bzw. zumindest funktionsgleich sind, haben sie dasselbe Bezugszeichen erhalten und brauchen daher nicht mehr näher erläutert zu werden. Es gelten die Ausführungen zu der ersten Version entsprechend.

Die beiden Ausführungsformen unterscheiden sich im wesentlichen durch eine unterschiedliche Gestaltung der Drehklinke 12 und des Klappenauswerfers 15.
Bei der ersten Ausführungsform ist die Drehklinke 12 ein zweiarmiger Hebel, wogegen im zweiten Fall nach der Fig. 6 die Drehklinke 12 durch einen einarmigen Hebel gebildet ist, der an einem Ende drehbar um die Achse 12 a und im Schließsinn vorgespannt durch eine nicht dargestellte Schenkelfeder an dem Außenprofil 6 angelenkt ist. Das andere, freie Ende der Drehklinke weist eine L-förmige Ausnehmung 12 d auf, die in lösbarer Wirkverbindung mit der am Seitenteil 15 b des Klappenauswerfers 15 befestigten Rastnase 14 steht. Im Normalzustand, d.h. in der im Figurenteil 6 A dargestellten Ruhelage sorgt die Schenkelfeder für eine wirksame Verriegelung zwischen der Rastnase 14 und der Ausnehmung 12 d in der Drehklinke und hält damit den Klappenauswerfer in der Ausgangslage.
Die L-förmige Ausnehmung 12 d verhindert ferner als Öffnungssicherung, dass der Klappenauswerfer 15 die Haltevorrichtung des aufstellbaren Innenteils 7 auslöst, wenn das Überrollschutzsystem im Rahmen des Einbaues in das Fahrzeug am Klappenauswerfer "getragen" wird. Der Klappenauswerfer wird dann gegen die eine Seite der L-förmigen Ausnehmung "verkantet".

Die Drehklinke 12 besitzt etwas versetzt gegenüber der Drehachse 12 a eine Nocke 12 e, welche in Wirkverbindung mit dem Stößel 11 der pyrotechnischen Aktuatoranordnung steht. Wird diese im Fall eines drohenden Überschlages gezündet, fährt der Stößel 11 stoßartig nach oben aus und verschwenkt dabei über die Nocke 12 e die Drehklinke 12 gegen den Uhrzeigersinn.
Der Figurenteil 6 B zeigt dabei den Zustand unmittelbar nach der Zündung, d.h. der Auslösung. Das freie Ende der Drehklinke 12 mit der L-förmigen Ausnehmung 12 d hat bereits etwas von der Rastnase 14 abgehoben, ohne dass die Verklinkung bereits völlig aufgehoben ist und die obere Kontur der Drehklinke hat den Klappenauswerfer über den Schwenkbolzen 19 praktisch noch nicht verschwenkt.

Im weiteren Verlauf der Aufstellung des Stößels 11 verschwenkt die Drehklinke 12 den Klappenauswerfer 15 über den Schwenkbolzen 19 gegen die Kraft der Klinkenfeder immer stärker im Uhrzeigersinn (Figurenteil 6 C), bis schließlich der Schwenkbolzen 19 das freie Ende der Drehklinke erreicht (Figurenteil 6 D). Die Klappe 9 ist dabei um einen Winkel von ca. 45° geöffnet, und der Haltebolzen 17 liegt noch am Rande seiner Laufkulisse 18 im Innenprofil an, d.h. das den aufstellbaren Überrollkörper bildende Innenprofil 7 ist noch niedergehalten und noch nicht ausgelöst.
Sobald der Haltebolzen 17 die Laufkulisse 18 verlassen hat, ist das Innenprofil 7 freigegeben und kann durch den jeweiligen Energiespeicher, z.B. eine Antriebsdruckfeder, in die Stützstellung ausgefahren werden. Der Figurenteil 6 E zeigt dabei den Zustand unmittelbar nach der Freigabe. Die im Innenprofil 7 ausgebildete, mit ausfahrende Kulisse 18 fährt an dem Haltebolzen 17 vorbei und verschwenkt dabei über den Haltebolzen 17 und die Rastnase 14 die Drehklinke 12 bzw. den Klappenauswerfer 15 weiter auf (Figurenteil 6 F), bis der endgültige Zustand nach Fig. 6 G erreicht ist. Die Rastnase 14 hält dabei die Drehklinke 12 gegen die Kraft der Klinkenfeder geöffnet, so dass eine anschließende Reversierbarkeit gewährleistet ist.

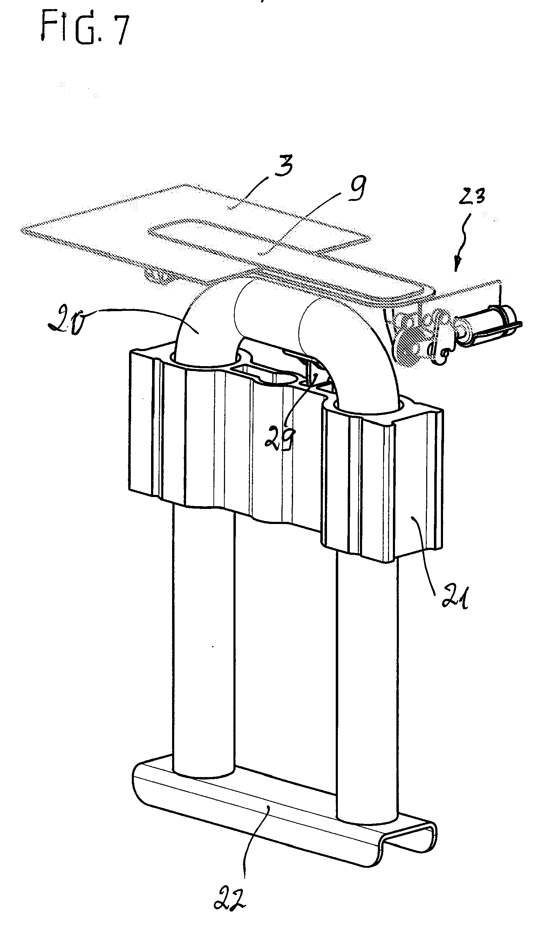

In den Figuren 7 bis 10 ist eine dritte Ausführungsform der Erfindung dargestellt. Bei dieser Ausführungsform ist, wie insbesondere die Fig. 7 zeigt, ein Überrollschutzsystem 1 mit einem U-förmigen Überrollbügel 20, dessen beide Schenkelrohre in einem karosseriefesten Führungsblock 21 aufgenommen und fußseitig über eine Traverse 22 verbunden sind, vorgesehen. Alle Einzelheiten und weitere notwendige Komponenten des Überrollschutzsystems sind der besseren Übersicht wegen nicht dargestellt, zumal sie durch den Stand der Technik bekannt sind.

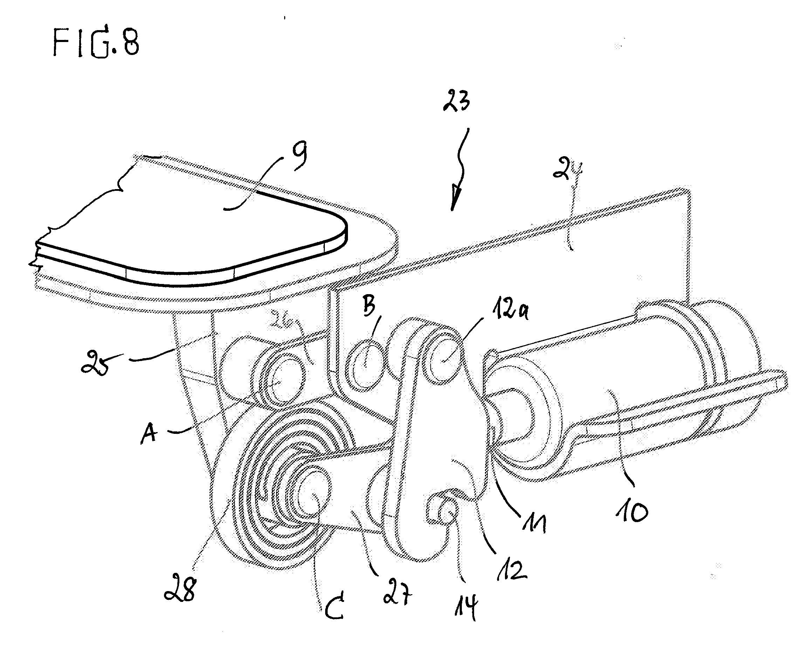

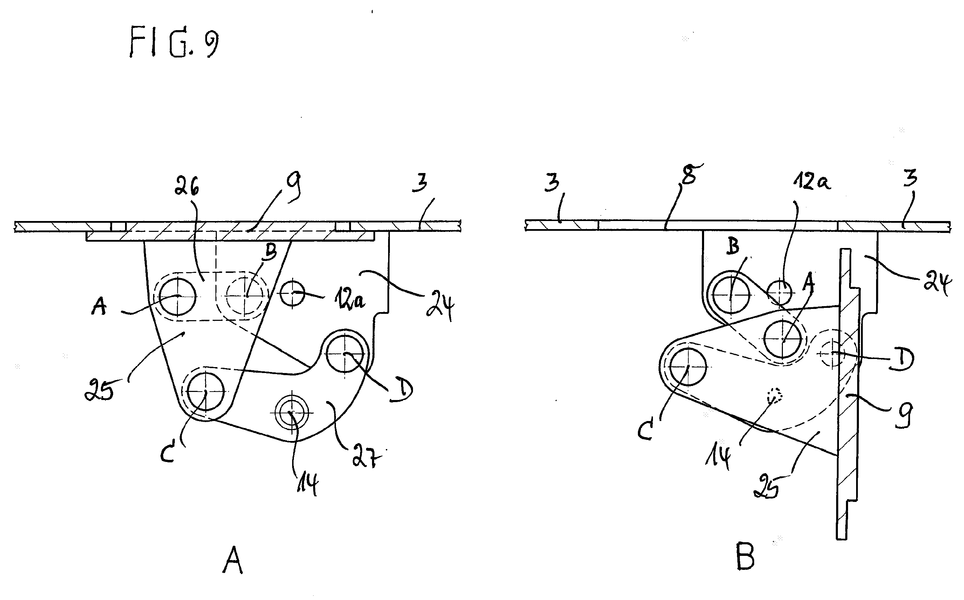

Der Klappe 9 ist eine speziell konstruierte Klappeneinfahr-Einheit 23 zugeordnet, welche in den Figuren 8 und 9 näher dargestellt ist und auf welcher sie fest angebracht ist. Im Gegensatz zu den beiden ersten Ausführungsformen wird durch die Einheit 23 die Klappe 9 nicht ausgeworfen, sondern nach unten in den Raum unterhalb der Karosse eingefahren. Hierdurch wird ein Bewegungsablauf der nach innen einfahrenden Klappe ermöglicht, der sehr flach ist.

Bei dieser dritten Ausführungsform sitzt die Haltevorrichtung für das Überrollbügelschutzsystem in der Nähe der Klappe 9 an dem Überrollschutzsystem, mit einem beweglichen Halteelement am karosseriefesten Außenprofil und einem Halteglied am ausfahrbaren Überrollbügel, wobei das bewegliche Halteelement von der karosseriefest gelagerten Klappe auslösend betätigt wird. Dabei ist es erforderlich, dass die Toleranzen zwischen dem Schutzsystem und der Klappeneinfahr-Einheit sehr gut aufeinander abgestimmt sind.

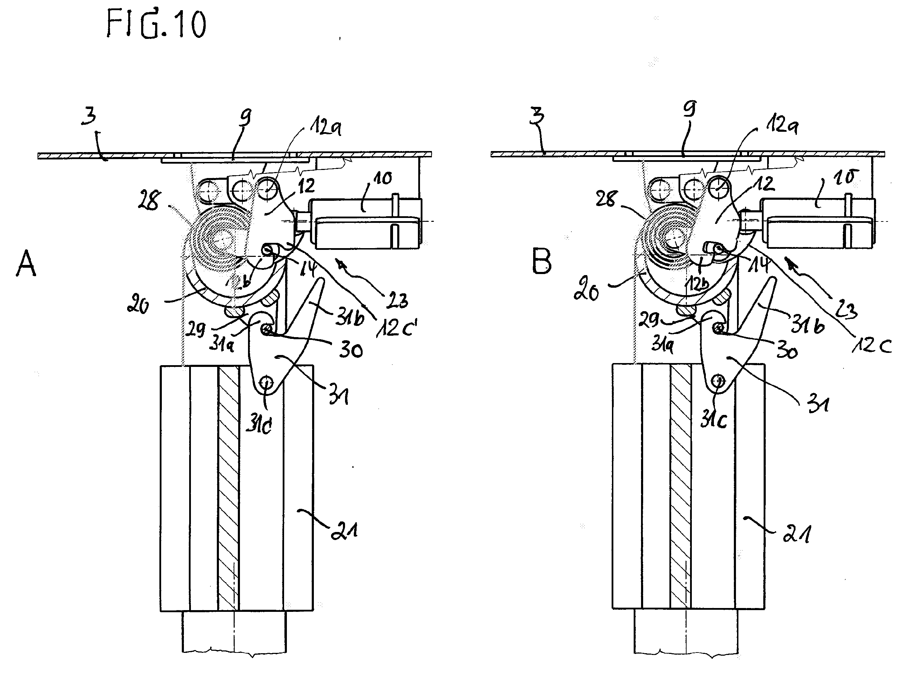

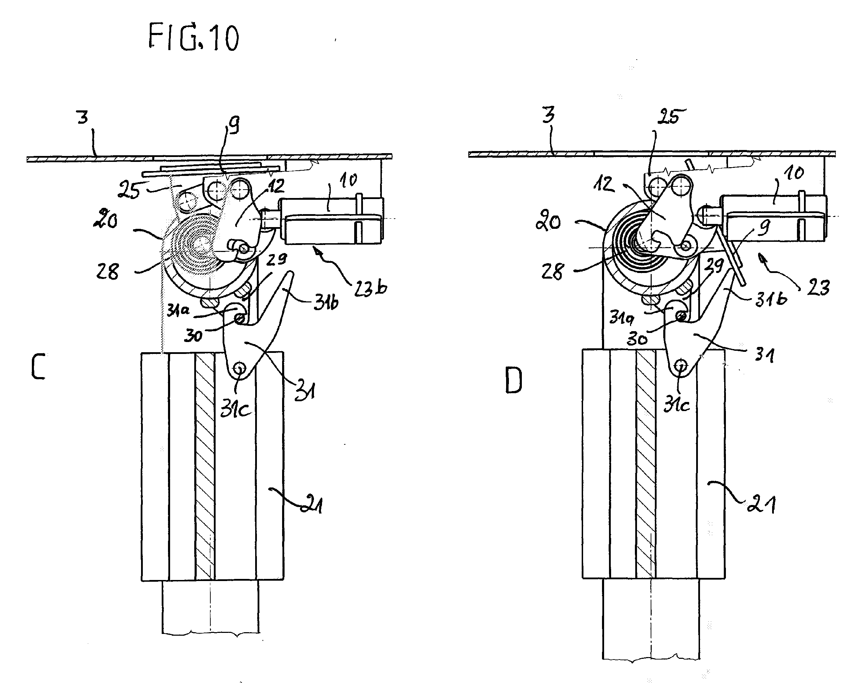

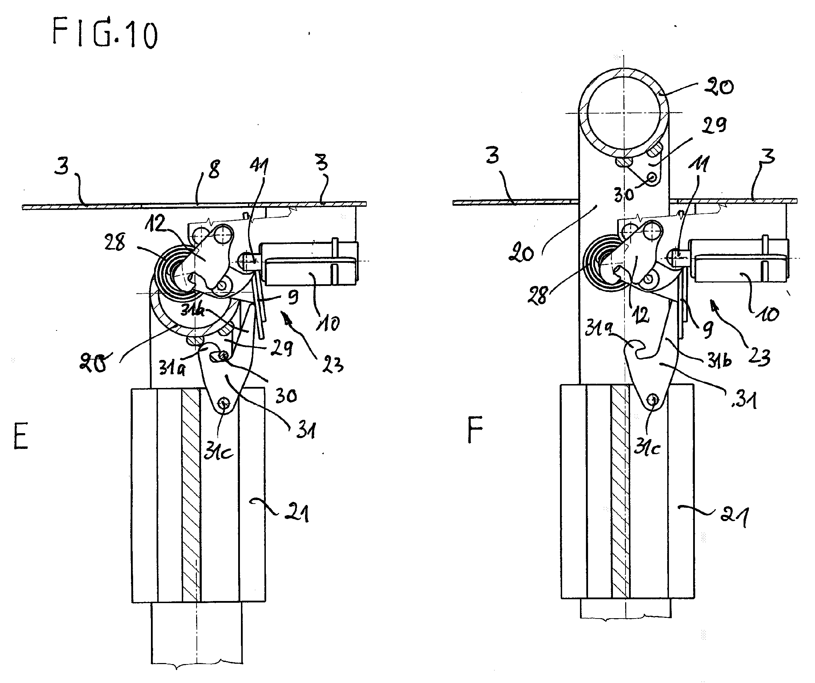

Die Haltevorrichtung und ihre Wirkverbindung mit der Klappeneinfahr-Einheit 23 ist in der Fig. 10 in mehreren Figurenteilen, die einzelne Betriebszustände zeigen, dargestellt.

Die Kopplung zwischen der Klappe 9 und der pyrotechnischen Aktuatoranordnung 10, 11 erfolgt über ein verklinkbares, federvorgespanntes 4-Gelenk-Scharnier, mit einem karosseriefesten Scharnierflügel 24, der durch ein Blechteil gebildet ist und einem schwenkbaren Scharnierflügel 25, der mit der Klappe 9 befestigt ist. Beide Scharnierflügel sind, wie insbesondere auch die Fig. 9 zeigt, über zwei Gelenkarme verbunden, einem oberen Gelenkarm 26, der an den Scharnierpunkten A und B der Scharnierflügel 25 und 24 angelenkt ist, und einem unteren Gelenkarm 27, der an den Scharnierpunkten C und D der Scharnierflügel 25 und 24 angelenkt ist. In Fig. 8 ist dabei der Gelenkpunkt D verdeckt.

Zur Bewegung des Scharnierflügels 25 relativ zum festen Scharnierflügel 24 ist auf der Achse des Gelenkpunktes C eine Spiralfeder 28 derart vorgespannt angeordnet, dass sie den beweglichen Scharnierflügel 25 unter Einfahren der Klappe 9 im Uhrzeigersinn verschwenken will. Dies wird im Normalzustand durch die am karosseriefesten Scharnierflügel 24 im Drehpunkt 12 a angelenkte Drehklinke 12 und die am unteren Gelenkarm 27 angebrachte Rastnase 14, die im lösbaren Wirkeingriff mit der Halteklaue 12 b der Drehklinke steht, verhindert. Wird der Aktuator 10 gezündet, öffnet der Stift 11 die Verrastung zwischen Drehklinke 12 und Rastnase 14, so dass dann die Spiralfeder 28 den Scharnierflügel 25 mit der Klappe aus der Normalstellung gemäß Fig. 9 A in die offene Stellung gemäß Fig. 9 B verschwenken kann.

Die Fig. 10 zeigt die Haltevorrichtung für das Niederhalten des federvorgespannten Überrollbügels 20 und ihre Wirkverbindung mit der Klappeneinfahr-Einheit 23.
Die Haltevorrichtung besteht aus einem am Querjoch des Überrollbügels 20 befestigten Halteglied 29 mit einem Niederhaltebolzen 30 und einer am karosseriefesten Führungsblock 21 drehbar angelenkten Halte-Drehklinke 31 mit einer Halteklaue 31 a, welche den Niederhaltebolzen 30 umfaßt. Die Drehklinke 31 weist einen länglichen Hebelarm 31 b für einen lösenden Wirkeingriff mit der Klappe 9 auf.

Im Ruhezustand (Fig. 10 A) befindet sich die Klappeneinfahr-Einheit 23 im Grundzustand nach Fig. 8 sowie Fig. 9 A, d.h. die Drehklinke 12 umfaßt die Rastnase 14 und verhindert eine Aktivierung der Spiralfeder 28. Die Halte-Drehklinke 31 umfaßt ihrerseits den Niederhaltebolzen 30, d.h. der Überrollbügel 20 kann nicht ausfahren.

Sobald der pyrotechnische Aktuator 10 gezündet ist, wird der Wirkeingriff der Drehklinke 12 mit der Rastnase 14 aufgehoben (Fig. 10 B) und die Spiralfeder 28 verschwenkt den schwenkbaren Scharnierflügel 25 mit der Klappe 9. Der Figurenteil 10 C zeigt dabei den Beginn der Schwenk-Einfahrbewegung. Beide Figurenteile B und C zeigen, dass in der Einfahrphase der Klappe auch der pyrotechnische Aktor mit Stößel 10, 11 mittels der Betätigungsnase 12 c der Drehklinke 12 die Schwenkbewegung der Klappe unterstützt und für die notwendige Losreißkräfte sorgt.
Sobald die Klappe 9 die Schwenkstellung gemäß dem Figurenteil 10 D erreicht, tritt sie in Wirkkontakt mit dem länglichen Hebelarm 31 b der Halte-Drehklinke 31 und verschwenkt diesen dabei gegen den Uhrzeigersinn. In der Stellung gemäß Figurenteil 10 E hat die Halteklaue 31 a der Halte-Drehklinke 31 den Niederhaltebolzen 30 freigegeben und der Überrollbügel 20 kann in die abstützende Stellung ausfahren, wobei die Spiralfeder 28 die Klappe 9 in eine vertikale Position gemäß Figurenteil 10 F eingefahren hat.

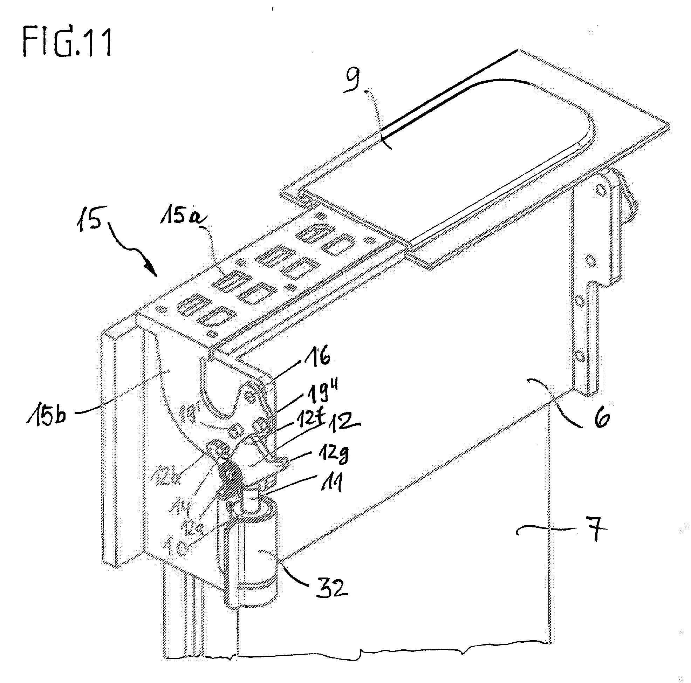

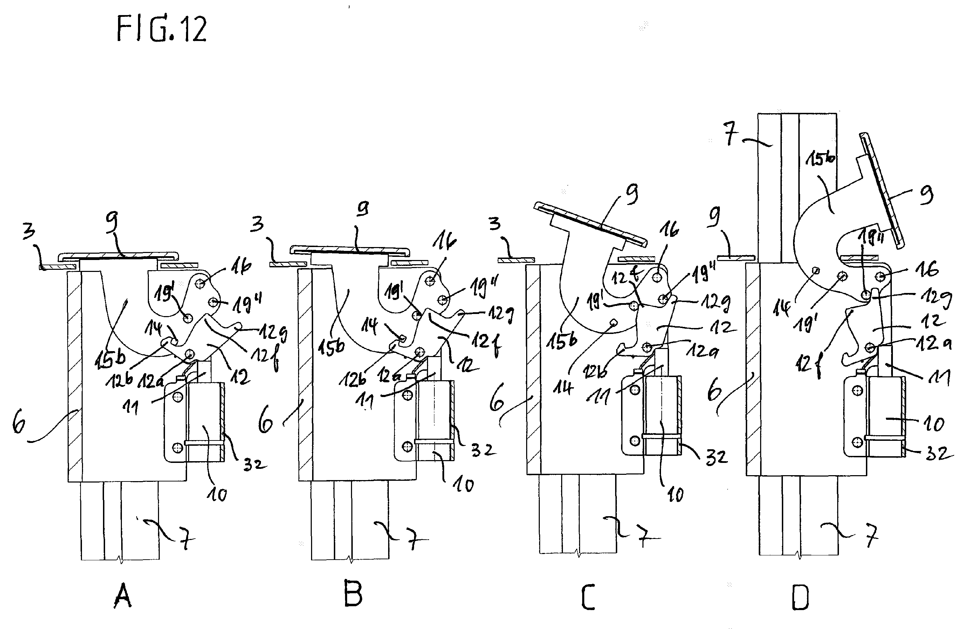

In den Figuren 11 und 12 ist eine weitere Ausführungsform der Erfindung gezeigt, die sich letztlich als Variante zur ersten Ausführungsform darstellen lässt. Es bestehen dabei folgende zentrale Unterschiede:
● Die pyrotechnische Aktuatoranordnung 10, 11 ist nicht in einer Kehlung des Außenprofils, sondern mit einer Manschette 32 im Randbereich des Außenprofils befestigt.
● Die Klappe 9 ist wie bei der Ausführung nach den Figuren 7 bis 10 direkt am Klappenauswerfer befestigt. Sie kann z.B., wie in Fig. 11 dargestellt, auf das langgestreckte Oberteil 15 a des Klappenauswerfers 15 aufgeclipt sein.
● Die wangenartigen Seitenteile 15 b des Klappenauswerfers, welche im Drehpunkt 16 am Außenprofil 6 angelenkt sind, haben eine gebogene, tubaartige Konfiguration. Das vordere Seitenteil 15 b weist dabei neben der Rastnase 14 für den Wirkeingriff mit der Halteklaue 12 b der Drehklinke 12 zwei beabstandet angebrachte Schwenkbolzen 19', 19" auf, die mit korrespondierenden Steuernocken 12 f bzw. 12 g zu unterschiedlichen Zeitpunkten in Wirkeingriff treten.

Der besseren Übersicht halber ist in den Figuren 11 und 12 nur der Klappenauswerfer 15 und seine Betätigung bzw. Auslösung über die Drehklinke 12 dargestellt. Die Haltevorrichtung und ihre Kopplung mit dem Klappenauswerfer ist entsprechend den Ausführungen zur ersten bzw. zweiten Ausführungsform ausgebildet.

Der Figurenteil 12 A zeigt das System im Grundzustand. Die Halteklaue 12 b umfasst die Rastnase 14 und hält den Klappenauswerfer verriegelt. Wird der pyrotechnische Aktuator 10 gezündet, wird diese Verriegelung aufgehoben und die Drehklinke liegt dabei mit ihrem ersten Steuernocken 12 f am ersten Schwenkbolzen 19' an, wodurch die Klappe 9 angehoben wird (Figurenteil 12 B). Dieser erste Schwenkbolzen 19' erfährt einen relativ kurzen Hub, d.h. greift mit einer relativ großen Kraft an, damit eine eventuelle Eisschicht sicher durchstoßen werden kann. Die Sperrklinke 12 gelangt nach diesem kurzen Hub mit ihrem zweiten Steuernocken 12 g in Wirkeingriff mit dem zweiten Schwenkbolzen 19" (Figur 12 C), der einen relativ großen Hub mit entsprechend kleinerer Kraft zum schnellen Öffnen nach durchstoßener Eisschicht erfährt, bis schließlich der Klappenauswerfer unter Auslösen der Haltevorrichtung und Aufstellen des Überrollkörpers in Form des Innenprofils 7 seine Endstellung erreicht (Figurenteil 12 D). Neben den drehbeweglich angelenkten Klappenauswerfern bzw. Klappeneinfahr-Einheiten ist es auch denkbar, die Klappe 9 mittels Piezotechnik von einer eventuellen Vereisung zu befreien, d.h. zu öffnen. Dazu werden an der Klappe oder im Randbereich des Ausschnittes 8, wie z.B. in der Dichtung der Klappe gegenüber dem Ausschnitt, Piezoelemente angebracht, an welche eine bestimmte elektrische Spannung mit vorgegebener Frequenz angelegt wird, so dass die Klappe in Schwingung versetzt wird und das Eis zerbricht. Dieses Anlegen der Spannung erfolgt im vorgegebenen zeitlichen Abstand vor dem Auslösen der Haltevorrichtung des Überrollbügelsystems oder auch in von der Außentemperatur abhängigen Zeitintervallen, die ein Vereisen der Klappe im Ausschnitt verhindern.

### Bezugszeichenliste

- 1: Überrollkörper
- 2: Heckscheibe
- 3: Hinteres Karosserieteil
- 4: Heckklappe
- 5: Befestigungslöcher
- 6: Außenprofil
- 7: Innenprofil
- 7 a: Schulter
- 8: Ausschnitt
- 9: Klappe
- 10: Pyrotechnischer Aktuator
- 11: Stößel
- 12: Drehklinke
- 12 a: Drehachse
- 12 b: Halteklaue
- 12 c: Betätigungsnase
- 12 d: L-förmige Ausnehmung
- 12 e: Nocke
- 12 f: erste Steuernocke
- 12 g: zweite Steuernocke
- 13: Klinkenfeder
- 14: Rastnase
- 15: Klappenauswerfer
- 15 a: langgestrecktes Oberteil
- 15 b: wangenartige Seitenteile
- 15 c: abgerundete Nase
- 16: Drehachse
- 17: Haltebolzen
- 18: Laufkulisse
- 19: Schwenkbolzen
- 19', 19": weitere Schwenkbolzen
- 20: Überrollbügel
- 21: Führungsblock
- 22: Traverse
- 23: Klappeneinfahr-Einheit
- 24: karosseriefester Scharnierflügel
- 25: schwenkbarer Scharnierflügel
- 26: oberer Gelenkarm
- 27: unterer Gelenkarm
- 28: Spiralfeder
- 29: Halteglied
- 30: Niederhaltebolzen
- 31: Halte-Drehklinke
- 31 a: Halteklaue
- 31 b: länglicher Hebelarm
- 31 c: Drehpunkt
- 32: Manschette

## Patentansprüche

1. Überrollschutzsystem für Kraftfahrzeuge mit mindestens einem sensorgesteuert durch Auslösen einer Haltevorrichtung aktiv aufstellbaren Überrollkörper (7; 20), das außerhalb des Fahrgastraumes im Heckbereich innerhalb der Karosserie (3) angeordnet ist, welche oberhalb des aufstellbaren Überrollkörpers (7; 20) einen Ausschnitt (8) aufweist, der im Normalbetrieb durch eine Klappe (9) abgedeckt ist, **dadurch gekennzeichnet, dass** die Klappe (9) in Wirkverbindung mit einer Einrichtung zum sensorgesteuerten mechanischen Öffnen der Klappe (9) aus dem sie aufnehmenden Ausschnitt (8) steht, welche mit der Haltevorrichtung (7 a, 15 c; 29, 30, 31) gekoppelt ist.

2. Überrollschutzsystem nach Anspruch 1, **dadurch gekennzeichnet, dass** die Einrichtung durch einen Klappenauswerfer (15) gebildet ist, der verschwenkbar an einem karosseriefesten Drehpunkt (16) angelenkt ist, in Verbindung mit einer ebenfalls an einem karosseriefesten Drehpunkt (12 a) verschwenkbar angelenkten, durch eine Klinkenfeder (13) im Schließsinn vorgespannten Drehklinke (12), die in lösbar verriegelnder und schwenkender Wirkverbindung mit dem Klappenausswerfer (15) steht.

3. Überrollschutzsystem nach Anspruch 2, **dadurch gekennzeichnet, dass** der Drehklinke (12) ein stiftausstoßender Aktuator (10) zugeordnet ist, dessen Stift im Wirkkontakt mit der Drehklinke (12) steht, derart, dass beim Aktivieren des Aktuators (10) die Drehklinke (12) unter Aufhebung der Verriegelung und nachfolgender Verschwenkung des Klappenauswerfers (15) verschwenkbar ist.

4. Überrollschutzsystem nach Anspruch 2 oder 3, **dadurch gekennzeichnet, dass** zum lösbaren Verriegeln des Klappenauswerfers (15) an einem Seitenteil (15 b) von ihm eine Rastnase (14) und an der Drehklinke (12) ein verriegelndes Gegenstück ausgebildet ist.

5. Überrollschutzsystem nach Anspruch 4, **dadurch gekennzeichnet, dass** das verriegelnde Gegenstück durch eine Halteklaue (12 b) an einem Ende einer zweiarmigen Drehklinke (12) gebildet ist.

6. Überrollschutzsystem nach Anspruch 4, **dadurch gekennzeichnet, dass** das verriegelnde Gegenstück durch eine L-förmige Ausnehmung (12 d) am freien Ende einer einarmigen Drehklinke gebildet ist.

7. Überrollschutzsystem nach einem der Ansprüche 2 bis 6, **dadurch gekennzeichnet, dass** zum Verschwenken des Klappenausserfers (15) an einem Seitenteil von ihm mindestens ein Schwenkbolzen (19) angebracht ist, der in Wirkverbindung mit einer Steuerkontur der Drehklinke (12) steht.

8. Überrollschutzsystem nach einem der Ansprüche 2 bis 7, **dadurch gekennzeichnet, dass** zur Kopplung des Klappenauswerfers mit dem Überrollkörper (7) eine Haltevorrichtung vorgesehen ist, bei der die Drehklinke (12) einen Haltebolzen (17) aufweist, der in Wirkverbindung mit einer Laufkulisse (18) im Überrollkörper (7) steht und der bei einem vorgegebenen Schwenkwinkel der Drehklinke (12) unter Lösen der Haltevorrichtung die Laufkulisse (18) verlässt.

9. Überrollschutzsystem nach Anspruch 7 oder 8, **dadurch gekennzeichnet, dass** zwei Schwenkbolzen (19', 19") beabstandet an dem Seitenteil (15 b) des Klappenauswerfers (15) angebracht sind und die Steuerkontur der Drehklinke (12) zwei beabstandet ausgebildete Steuernocken (12 f, 12 g) für einen kräftemäßig gestaffelten Wirkeingriff mit den Schwenkbolzen (19', 19") abhängig von dem Verschwenkwinkel der Drehklinke (12) aufweist.

10. Überrollschutzsystem nach einem der Ansprüche 2 bis 9, **dadurch gekennzeichnet, dass** der Klappenauswerfer (15) direkt unterhalb der Klappe (9) angeordnet ist.

11. Überrollschutzsystem nach einem der Ansprüche 2 bis 9, **dadurch gekennzeichnet, dass** die Klappe (9) auf dem Klappenauswerfer (15) angebracht ist.

12. Überrollschutzsystem nach einem der Ansprüche 2 bis 11, **dadurch gekennzeichnet, dass** der Klappenauswerfer (15) am Überrollschutzsystem oder an der Fahrzeugkarosse (3) befestigt ist.

13. Überrollschutzsystem nach einem der Ansprüche 2 bis 12, **dadurch gekennzeichnet, dass** der Klappenauswerfer so ausgebildet ist, dass er die Klappe entweder aufstößt oder in das Innere der Karosserie versenkt.

14. Überrollschutzsystem nach Anspruch 1, **dadurch gekennzeichnet, dass** die Einrichtung durch eine scharnierartige, karosseriefest angebrachte Klappeneinfahr-Einheit (23) gebildet ist, die mittels einer Drehklinke (12) lösbar mittels einer Aktuatoranordnung (10, 11) verriegelt ist und eine Spiralfeder (28) zum Entfalten des Scharniers (24 - 27) aufweist, in Verbindung mit einer am Überrollschutzsystem angebrachten Haltevorrichtung, gebildet durch ein am Überrollkörper (21) angebrachten Halteglied (29) mit Niederhaltebolzen (30) und einer im karosseriefesten Drehpunkt (31 c) angelenkten Halte-Drehklinke (31) mit einem länglichen Hebelarm (31 b) für einen lösenden Wirkeingriff mit der eingefahrenen Klappe (9).

15. Überrollschutzsystem nach Anspruch 1, **dadurch gekennzeichnet, dass** die Einrichtung eine piezoelektrische Anordnung zum Lösen der Klappe (9) in dem zugehörigen Karosserieausschnitt (8) aufweist.
